# EUROPEAN PATENT APPLICATION

(11) **EP 4 578 522 A1**
(43) Date of publication of application: **02.07.2025**
(21) Application number: 24201863.8
(22) Date of filing: 23.09.2024
(51) Int. Cl.: A63F 13/54, H04S 7/00

(54) **A METHOD OF SIMULATING THE PROPAGATION OF AN AUDIO SIGNAL**

(30) Priority: 09.10.2023 GB 202315484
(71) Applicant: Sony Interactive Entertainment Europe Limited, London W1F 7LP (GB)
(72) Inventor: JONES, Michael Lee, London, W1F 7LP (GB); BUCHANAN, Christopher George, London, W1F 7LP (GB); ARMSTRONG, Calum, London, W1F 7LP (GB); SMITH, Alexei Ashton Derek, London, W1F 7LP (GB); MANIKA, Maria Pilataki, London, W1F 7LP (GB)
(74) Representative: Gill Jennings & Every LLP

(57) **Abstract**

A computer-implemented method of simulating the propagation of an audio signal between an audio source and receiver in a virtual environment, the virtual environment comprising one or more sound-reflective objects, the method comprising: simulating a plurality of audio paths for propagating the audio signal between the audio source and receiver within the virtual environment, one or more of the simulated audio paths comprising a reflection from a sound reflective object; and for one or more of the audio paths simulated, applying a deviation of the effective simulated position of one or more of the audio source, receiver and sound reflective object within the virtual environment, where the effective simulated position is used to determine a path delay associated with the simulated audio path.

## Description

### FIELD OF THE INVENTION

Disclosed herein is a method of simulating the propagation of an audio signals. More specifically, a method of simulating the propagation of an audio signals between an audio source and receiver in a virtual environment is disclosed.

### BACKGROUND

Modern virtual environments, such as video game environments, are programmed such that physical phenomena that occur in reality are closely replicated in simulations. For example, video game environments are programmed to mirror the acoustic behaviours of real environments, such that sounds propagate in a manner akin to that in reality.

When producing simulated audio signals representing sounds in a virtual environment, such as a video game environment, undesired phasing artefacts can be present in the audio output. This is due to interference between multiple copies of the simulated audio signals as they reflect off simulated surfaces in the virtual environment. As a virtual avatar moves around in the video game environment, for example, the undesired phasing artefacts can become more pronounced. In particular, this effect is more noticeable when a delay between signals is constant; when the delay is changing in a smooth, predictable pattern; and when the delay corresponds to half the wavelength of a frequency of interest which causes maximal destructive interference.

There accordingly exists a need for improved methods of simulating the propagation of audio signals in virtual environments that reduce the degree of phase artefacts in the output audio.

### SUMMARY OF INVENTION

It is an object of the present invention to provide methods and systems which makes progress in solving some of the problems identified above.

According to a first aspect of the present invention there is provided a computer-implemented method of simulating the propagation of an audio signal between an audio source and receiver in a virtual environment, the virtual environment comprising one or more sound-reflective objects, the method comprising: simulating a plurality of audio paths for propagating the audio signal between the audio source and receiver within the virtual environment, one or more of the simulated audio paths comprising a reflection from a sound reflective object; and for one or more of the audio paths simulated, applying a deviation of the effective simulated position of one or more of the audio source, receiver and sound reflective object within the virtual environment, where the effective simulated position is used to determine a path delay associated with the simulated audio path..

When simulating acoustics there can be undesired phasing artifacts in the audio output. This is due to the playback of multiple copies of the same audio but with slight delays causing constructive and destructive interference, resulting in a "whooshing" sound as the user moves around in the virtual environment. This effect is also known as comb filtering.

The effective simulated position of an object comprises the position in the virtual environment that provides the simulated path delay associated with an audio path comprising that object. In particular the effective simulated position is the geometric position in the virtual environment used to calculate a path delay for an audio path involving that object. For example the effective simulated positions of a source and receiver are the positions in the virtual model that provide an audio path length between the source and receiver giving the path delay. In some cases, the effective simulated position may differ from the actual geometric position of the object in the virtual environment, for example as used in displaying the virtual environment to a user. By applying a differing deviation (i.e. by applying dynamic changes in the effective simulated position of object(s) in the virtual environment) of one or more of the audio source, receiver and sound reflective object, path delays between the audio paths are introduced so as to change their phase relationships. A "path delay" comprises the delay applied to an audio signal propagated along that audio path.

In some examples, applying a deviation to the effective simulated position of an object comprises applying a deviation to the path delay of an audio path involving the object. This differing deviation of the effective simulated position may be referred to as a "jitter" in the effective simulated position due to the variations and/or fluctuations overtime in the path delay associated with the simulated audio path.. As such, there is a minimisation of the phasing artefacts in the audio output of the virtual environment and a reduction in total comb filtering artefacts in the audio signal in the virtual environment. In particular, by jittering the effective simulated positions of objects involved in the simulation of audio paths, varying delays are applied to the different paths over which an audio signal is propagated which acts to reduce the effects of comb filtering at any one frequency. In particular, by applying deviations to jitter the path delays, the method acts to smooth the spectral output to provide a flatter spectrum without the large variations which are noticeable to a user as they navigate the virtual environment.

"Applying a deviation of the effective simulated position" preferably comprises applying an alteration of the geometric position of one or more of the audio source, receiver and sound reflective object within the virtual environment, for example as defined in a model of the virtual environment used for the audio simulation. Preferably the deviation of the position of objects is applied only for the purpose of the audio simulation, such that the position of objects within the graphical output of the virtual environment remain constant. The deviation may comprise a displacement of the object in the model of the virtual environment used for simulation of the propagation of an audio signal.

In other examples, "applying a deviation of the effective simulated position" comprises varying the delay value associated with one or more of the audio source, receiver and sound reflective object. In particular, in some examples the actual coordinates of the object in the virtual environment may remain constant but the "effective position" is varied - i.e. the position used in determining the delay associated with the audio path. This has the same outcome - the delay values are jittered across the audio paths, but means that the actual geometric position of the one or more of the audio source, receiver and sound reflective object within the virtual environment need not be altered within the model. In some preferable examples, the method comprises applying a differing deviation to the effective simulated position of the source for each of the simulated audio paths. Alternatively, the method comprises applying a differing deviation to the effective simulated position of the receiver for each of the simulated audio paths. The differing deviation is a dynamic and/or time-varying effect. In other words, the deviation of the effective simulated position will change over time, resulting in a jittering of the effective simulated position of the source or receiver. Focussing on jittering the effective simulated position of the source or receiver, ensures that varying path delay changes are introduced to mitigate phase artefacts, and provides a computationally efficient method focusing on altering the position of a single object in the virtual environment.

In some examples, a differing deviation may be applied to a plurality of audio paths, preferably to each of the audio paths simulated. In this way, each path has a differing adjustment to the corresponding delay, preventing simply shifting of comb filtering effects from one frequency to another.

In some examples, the sound reflective object may comprise a reflective surface from which the audio signal is reflected between the source and receiver. The reflective surface may be, for example a boundary, wall or ceiling in the virtual environment.

In some examples, the method may comprise simulating the plurality of audio paths using an image source method, where a deviation is applied to the effective simulated position of an image audio source. In more detail, the method may further comprise generating a mirror image audio source by reflecting the audio source in the reflective surface; and applying a deviation in the effective simulated position of the mirror image audio source. In this way, delays between the audio paths of the mirror image audio source are introduced so as to decorrelate the said audio paths and reduce total comb filtering artefacts.

In some examples, the method may comprise generating a plurality of mirror image audio sources, by reflecting the audio source in each of a plurality of reflective surfaces of the virtual environment, wherein the method further comprises applying a different deviation to the effective simulated position of each mirror image audio source.

In some examples, the method may further comprise varying at least one of: a effective simulated position of the reflective surface between different simulated audio paths; and an orientation of the reflective surface between different simulated audio paths. In some examples, varying the orientation of the reflective surface comprises adjusting the angle of the reflective surface so as to change the direction to which a normal vector of the reflective surface is pointing. In some examples, the generated mirror image audio source in the reflective surface will be generated with a location that alters based on this variation to the reflective surfaces.

In some examples, the method may be configured to be performed at runtime during simulation of the propagation of the audio signal during gameplay. The method provides a computationally efficient way of reducing phase artefacts during gameplay.

In some examples, applying the differing deviation of the effective simulated position comprises randomly adjusting the effective simulated position of one or more of the audio source, receiver and sound reflective object. Randomly adjusting or changing the effective simulated or the geometric position of said object results in a randomised time shift which introduces a delay between the audio signals. In this way, there is a randomisation to the phase relationships between the audio signals arriving at the receiver, thereby reducing the likelihood of comb filtering. Additionally, regularities in the phase relationships between the audio signals are minimised, thereby minimising phasing artefacts.

Preferably, the random adjusting the effective simulated position is determined by a random walk. In particular a random walk algorithm is applied to the effective simulated position of one or more of the source, receiver and a virtual object in the virtual environment. A random walk is a random process that describes a path comprising a series of random steps. As such, the resulting differing deviation of the effective simulated or the geometric position of one or more of the audio source, receiver and sound reflective object is a random displacement from their current position. Preferably, the random walk algorithm is a Monte Carlo algorithm. The random walk may be a one-dimensional random walk, a two-dimensional random walk or a three-dimensional random walk. In this way, the differing deviation does not depend on a previous movement, such that there will be a randomness induced to each audio path.

In some examples, the method may further comprises determining at least one wavelength or at least one frequency of an audio signal to be propagated, and wherein the deviation of effective simulated position is determined based on the at least one wavelength or at least one frequency of the audio signal.

In some examples, determining at least one wavelength or at least one frequency of an audio signal to be propagated comprises determining a dominant frequency of the audio signal and determining the magnitude of the deviation based on the determined dominant frequency. Preferably, the dominant frequency comprises the lowest dominant frequency of the audio signal.

In some examples, determining at least one wavelength or at least one frequency of an audio signal to be propagated comprises calculating the spectral centroid of the audio signal.

Preferably, the deviation of effective simulated geometric position is greater for longer determined wavelengths of the audio signal and the deviation of geometric position is lesser for shorter determined wavelengths of the audio signal.

In some examples, the method comprises determining a half wavelength value of a dominant frequency of the audio signal, and wherein the magnitude of the applied deviation is restricted to less than the half wavelength value.

In some examples, the method may further comprise determining a half wavelength value of the at least one wavelength of the audio signal, and wherein the deviation of the differing deviation is less than the half wavelength value.

In some examples, performing audio content analysis on the audio signal to determine one or more dominant frequencies of the audio signal; determining, based on the dominant frequencies, delay values likely to cause phase artefacts in the audio signal; applying a random deviation to effective simulated position of one or more of the audio source, receiver and sound reflective object when simulating an audio path having a delay value within a predetermined threshold of a delay value likely to cause phase artefacts.

In some examples, the method may comprise applying a plurality of deviations to the effective simulated position of one or more of the audio source, receiver and sound reflective object during propagation of an audio signal. In particular the deviation may be time-varying so that differing delays are applied to an audio signal as it is propagated.

The method preferably further comprises using the adjusted audio paths to propagate and output an audio signal. In particular the method may comprise propagating an input audio signal over the audio paths following the adjustment to simulate an output audio signal comprising the perception of an audio signal at the receiver; and outputting the output audio signal. In this way the user will experience reduced comb filtering effects in the output audio.

In some examples, the magnitude of the deviation is enforced to be a prime number. In this way the likelihood of artificial correlation is further reduced and there is an increased naturalness of output.

In some examples, the method may further comprise detecting likely intrusive comb filtering and wherein the deviation of the differing deviation is determined based on the intrusive comb filtering.

According to a second aspect of the present invention there is provided a computer program comprising instructions that, when executed by a computer, cause the computer to perform the method of any preceding claim.

According to a third aspect of the present invention there is provided a video gaming system comprise a processor configured to perform the method of any preceding claim.

### BRIEF DESCRIPTION OF DRAWINGS

Figures 1 schematically shows an exemplary display screen of a multimedia entertainment system according to the present invention;
Figures 2A schematically shows an embodiment of the present invention;
Figures 2B schematically shows an embodiment of the present invention;
Figures 3A schematically shows an embodiment of the present invention;
Figures 3B schematically shows an embodiment of the present invention;
Figures 4 schematically shows a flow diagram of a method of the present invention.

### DETAILED DESCRIPTION

A method according to the present invention may be carried out on a multimedia entertainment system 100. The multimedia entertainment system 100 may comprise a display screen 110 coupled to a computer via a wired or wireless connection. The display screen 110 may, for example, be a television, a home cinema system, or a projector.

The computer in one embodiment, may be a gaming system console which allows players to play games or access applications and interface with the games and applications through a peripheral device. Alternatively, the computer may be a multimedia streaming receiver, a DVD player or other multimedia source. In some implementations, the display screen and the computer may be combined in a single device.

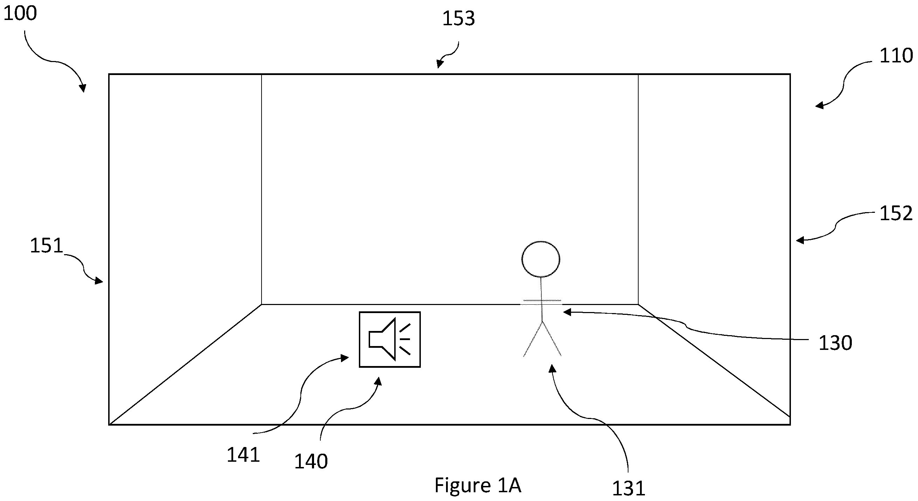

Figures 1A schematically shows an exemplary display screen 110 of a multimedia entertainment system 100. Shown is a virtual environment 120 of a video game comprising a receiver 130, which in this example is a user-controlled character 130, at a receiver position 131 in the virtual environment 120. A simulated audio signal is output from an audio source 140 at an audio source position 141 in the virtual environment 120. In this example, the audio source 140 is a sound box 140 which produces audio signals in one or more directions of the virtual environment 120. The user 120 hears the audio signals that are simulated from the audio source 140 as they reach the receiver position 131. This particular virtual environment 120 comprises three walls 151, 152, 153 which are sound-reflective objects. In other examples, the sound-reflective objects in the virtual environment 120 may include furniture, vehicles, other users or any other sound-reflective object that may be found in a virtual environment 120 of a video game. The sound-reflective objects comprise a reflective surface from which the audio signal is reflected between the source 140 and receiver 130.

The simulation of early reflections in a virtual environment, such as virtual environment 120, is particularly important as this provides the listener with majority of the spatial information about an environment. This is because of the relatively high strengths, recognisable directionalities and distinct arrival times of the early reflections. In contrast, in the late reverberation phase when the sound has reflected from many surfaces in the environment, the impulse response resembles an exponentially decaying noise function with such a high density, the ear is no longer able to distinguish individual reflections such that usually statistical methods are used to model the late reverberation of an audio signal.

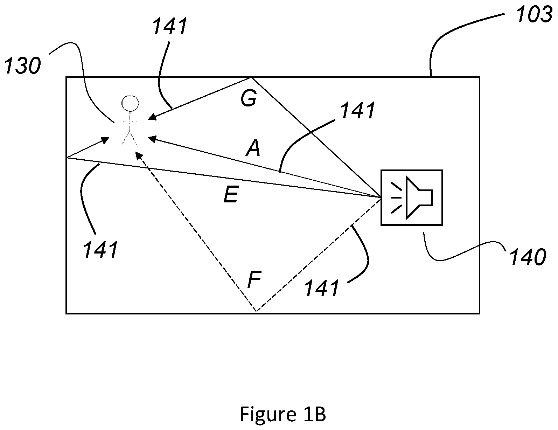

As illustrated in Figure 1B, geometric methods are generally used to simulate early reflections, where "early reflections" are generally considered those arriving in the first 20 - 70 milliseconds of the audio being admitted. These generally involve low order reflections such as first, second and possibly third-order reflections from acoustically reflective surfaces within the virtual environment 120. Simulation methods use one of a number of different methods to determine propagation paths 141 between the source 140 and receiver 130 within the virtual environment 120. Then, for each of these propagation paths 140, a delay can be calculated, for example relative to a primary propagation path representing the most direct and earliest arriving sound wave at the receiver 130, which is generally of the greatest intensity. In Figure 1 path A represents the primary propagation path, direct between the source 140 that receiver 130, and paths E, F and G represent first order reflections from the boundary of the virtual environment 120. As can be seen in Figure 1, paths E, F and G are each longer than the primary propagation path A, and each have a differing delay of the audio signal arriving at the receiver 130.

There are a number of well-known methods for determining the propagation paths 141 between a source 140 and receiver 130 in a virtual environment 120. These include image source methods that involve computing specular reflection paths by considering virtual sources generated by mirroring the location of the audio source 140 over each reflective surface of the environment. Other methods include ray-tracing methods which find propagation paths between a source 140 and receiver 130 by generating rays emanating from the source position and following them through the environment until an appropriate set of rays has been found reaching a receiver position. Beam tracing methods determine propagation paths from a source by recursively tracing pyramidal beams (sets of rays) through the environment.

Irrespective of the method, once the propagation paths have been determined the effects of the paths are combined into a filter that is applied to a source audio signal. This involves modelling the attenuation and scattering of sound as it travels along each path which, depending on the complexity of the simulation, may take into account source emission patterns, distance attenuation, atmospheric scattering, reflectance functions, diffraction models and receiver sensitivity. The combined effects of the paths are applied as a filter to the source signal to simulate the audio arrive at receiver location.

As described above, when multiple reflections of the same signal generated with different delays there are phase artefacts or "comb filtering" in the audio signal, which become particularly apparent as a receiver moves around in the virtual environment 120. Particular subsets of the reflections may have a specific path delay that significantly interferes with the original signal more than other paths. This can be dependent on the audio content of the audio signal.

In a specific example, a signal offset by 1 millisecond will have a first peak at 1000Hz. Cancellation of the signal occurs at (1/delay time)/2 which is 500Hz is this example. Peaks will occur at integer multiples of the first peak and nulls occur at the peak multiples minus the null frequency. Therefore, there will be cancellations of signals in this example at 500Hz, 1500Hz etc. The comb filtering effect is most noticeable when either the delay between signals is constant, the delay is changing a smooth predictable pattern (for example a linear increase), or the delay corresponds to half the wavelength of a frequency that is prominent within the audio signal, therefore causing maximal destructive interference.

For simplicity, only primary propagation path A and first order reflection path G (separated into incident path B and reflected path C) will be used to demonstrate the present method. However, it is understood by the skilled person that there may be a number of other paths that may be simulated as described above in the present invention.

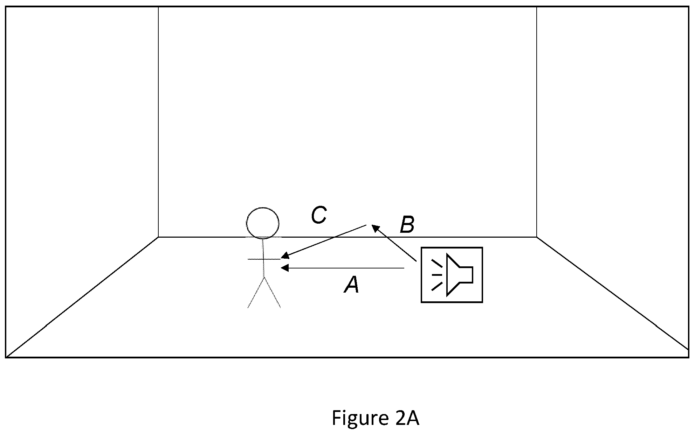

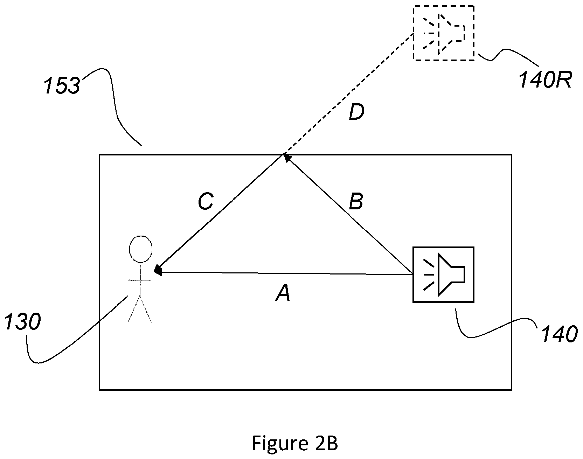

Figures 2A and 2B show an exemplary scenario including an audio source 140 at an audio source position 141 and a virtual user 130 at a receiver position 131. The virtual sound source 140 emits a direct incident ray A in a first direction towards the user 130 at the receiver location 131. As shown, the direct incident ray A travels along a direct audio path to the receiver location 131. Also shown is an incident ray B, a reflected ray C, and an image D of the incident ray B. The path travelled by ray B followed by ray C is the specular audio path. Ray C is generated by a mirror image audio source D in the reflective surface 153.

Due to this delay between the incident ray A and reflected ray C, there will be constructive and deconstructive interference resulting in peaks and nulls in the combined frequency signal, which may be noticeable by the virtual user 130 at the receiver position 131.

One solution to this problem is to "jitter" the geometric position of the audio source 140 in the virtual environment 120. The term "jitter" is used to refer to a differing deviation or changes in the geometric position of the audio source 140 in the virtual environment 120. By jittering the audio source 140 a time delay is introduced between the audio signals, thereby adjusting their phase relationship and reduce total comb filtering artefacts. By repeatedly repositioning the audio source 140, regularities in the phase relationships between audio signals are minimised and the long-term spectral output will be overall flatter.

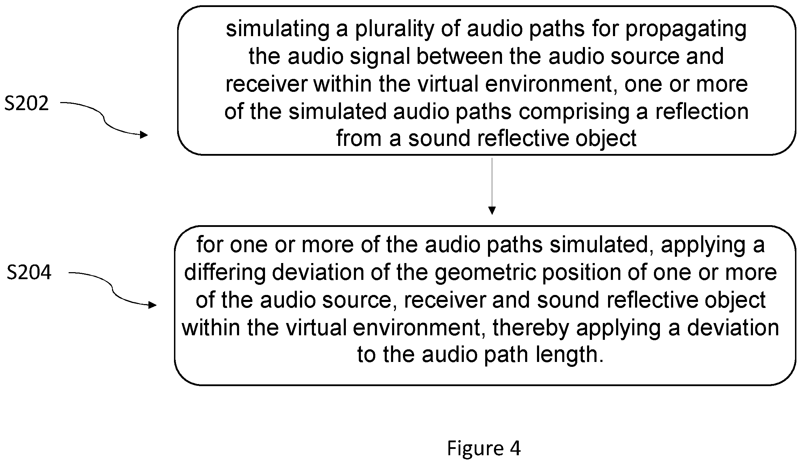

Figure 4 shows a flow diagram of a method 200 of the present invention. At step 202, a plurality of audio paths for propagating the audio signal between the audio source 140 and receiver 130 within the virtual environment, one or more of the simulated audio paths comprising a reflection from a sound reflective object are simulated. At step S204, for one or more of the audio paths simulated, applying a differing deviation of the geometric position of one or more of the audio source, receiver 130 and sound reflective object within the virtual environment, thereby applying a deviation to the audio path length.

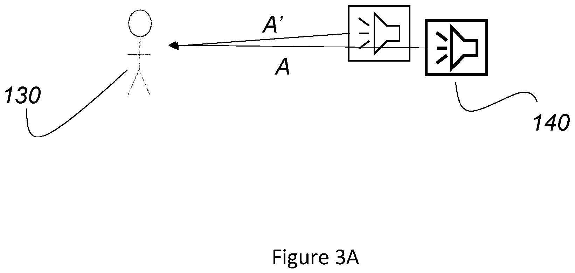

To demonstrate the differing deviation of the geometric position of, for example, the audio source 140, Figure 3A shows a simplistic scenario wherein the audio source 140 is at a first position emitting a direct incident ray A that travels along a direct audio path towards the user 130. In this example, the geometric position of the audio source 140 experiences a random shift such that the subsequently emitted direct incident ray A travels along an audio path of a different length to that of direct incident ray A. For each audio path simulated, the geometric position of the audio source 140 is nudged or changed in this way. Repeated deviation of the audio source 140 in the virtual environment 120 results in a continuous jittering of the geometric position of the audio source 140. As such, there is a delay between when ray A and ray A reach the receiver position 131 resulting in a change in the phase relation between said rays, and reduction in combing artefacts.

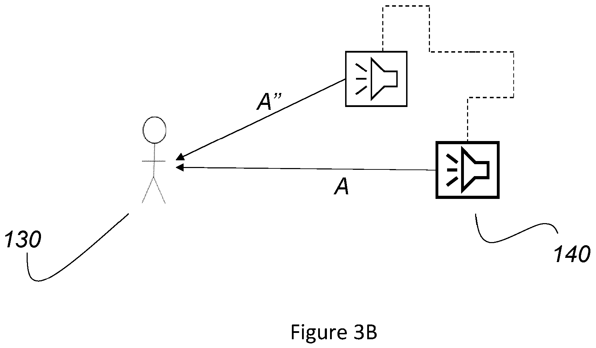

For improved decorrelation of the set of audio signals, the geometric position of the audio source 140 is randomly jittered and deviated. In other words, the position of the sound source 140 is randomly "nudged" in a random direction in the virtual environment 120 for each audio path simulated. In this way, the time delay between audio paths reaching the receiver is randomised so as to reduce the comb filtering. In some examples, the direction of deviation of the geometric position of the audio source 140 may be determined by a random walk, as shown in Figure 3B. Figure 3B shows the path by which the audio source 140 has taken after following a series of random steps determined by a random walk algorithm. In other words, this is a visualisation of the motion of the audio source 140 as it is jittered. As such, there is a delay between when ray A and ray A" reach the receiver position 131 resulting in a change in the phase relation between said rays.

The random walk may be a one-dimensional random walk, a two-dimensional random walk or a three-dimensional random walk. In one example, the virtual sound source 140 may emit audio signals in a number of directions and can move in any one of the positive x-direction, negative x-direction, positive y-direction, or negative y-direction with an equal probability. In this way, the virtual sound source 140 exhibits random differing deviation in two-dimensions of the virtual environment 120.

In some examples, the actual geometric position of the audio source 140 does not need to be differed within the model to achieve the desired effect. Alternatively, the effective simulated position of the audio source 140 can undergo differing deviation to determine a path delay. This means that the actual position of the object in the model of the environment is not varied, but the effective position used for determining the path delay is adjusted. As such, a varying delay line can be implemented to introduce a varying delay between the simulated audio signals, simulating location changes of the objects in the virtual environment without changing their geometric position within the model of the virtual environment.

Audio signals with a low frequency have a longer wavelength, and therefore would require a larger positional change in the virtual sound source position 141 to have a noticeable effect on the phase difference between audio signals. Additionally, since comb filtering occurs when there is a delay of a half-wavelength between the audio signals, it is advantageous to have a phase different between different audio signals less than +/- half a wavelength. In this way, a delay of less than a half wavelength is enforced such that each audio signal will arrive at approximately the same time.

Therefore, in order to further minimise the constructive and deconstructive interference between the audio signals, the deviation of the geometric position of the audio source 140 between different audio paths has an upper threshold of half a wavelength (i.e. a maximum deviation distance is the half a wavelength) of the audio signal output by the audio source 140. In one example, the wavelength of the dominant frequency of the audio signal is determined and the half wavelength value is calculated. Each deviation in position of the virtual sound source 140 may be a randomly determined value below the maximum deviation distance. In other words, the jitter motion of the virtual sound source 140 is subjected to a radius of movement defined by the calculated half wavelength.

Further, in some examples, the lowest dominant frequency in the audio signal is determined, the wavelength of the lowest dominant frequency is calculated, and a half wavelength value is calculated. Each deviation in geometric position of the virtual sound source 140 may be a randomly determined value below the calculated half wavelength value. In other examples, the lowest frequency subject to comb filtering given the delay is determined and the half wavelength value is calculated.

In a specific example, the wavelength of a 250Hz audio signal is 1.37m (half-wavelength being 0.685m), whereas a 3kHz audio signal is 0.11m (half-wavelength being 0.055m), therefore for the 250Hz signal (i.e. the lower frequency signal) requires a larger change in geometric position when jittering the sound source 140. In this example, the 250Hz audio signal will have a maximum deviation distance of 0.685m such that the differing deviation in position of less than 0.685m, while the 3kHz audio signal will have a maximum deviation distance of 0.11m such that the differing deviation in position of less than 0.11m.

In another specific example, a delay of 0.003 seconds (or 1 meter) for a given audio signal will result in comb filtering with a first notch at 171Hz. If the audio source contains low frequency content, then the jitter of geometric position of the sound source 140 may have a maximum 1 meter radius. In other words, the total positional change of the audio source is less than 1 meter. In another specific example, if the audio source 140 contains primarily speech material, dominant frequencies may start at 500Hz. Therefore, the concern is with comb filtering above 500Hz. This would occur when there is a delay of half-wavelength, which in this case is 0.34m. As such, 0.34m becomes the maximum deviation distance.

In other examples, the receiver position 131 may instead or additionally exhibit differing deviation in its geometric position in any of the above-described ways relating to the audio source 140. Preferably, the receiver 130 experiences a differing deviation of the geometric position while the audio source 140 and the sound-reflective objects in the virtual environment 120 remain relatively stationary.

In other examples, the mirror image audio source 140R in the reflective surface 153 exhibits deviations in position between different audio paths of the mirror image audio source 140R. Since the distance between the mirror image audio source 140R and receiver 130 determines the delay time of audio paths of the mirror image audio source 140R, a deviation in the position of the mirror image audio source 140R causes changes in the delay times of said audio paths.

In some examples, the method further comprises varying the position of the reflective surface and/or the orientation of the reflective surface between different simulated audio paths. In this way, the generated mirror image audio source 140R in the reflective surface can be generated with a location altered based on this variation to the reflective surfaces. Referring to Figure 2B, when the position of reflective surface 153 varies, reflected ray C will have an altered audio path, thereby introducing a delay between the audio signals as they reach the receiver 130. As with differing deviation to the audio source 140, the position of the deviation of the mirror image audio source 140R may follow a random path, preferably following a random walk.

Other examples of deviating the path length between audio signals may include the magnitude of the deviation being enforced by a prime number. This further minimise the constructive and deconstructive interference between the audio signals.

## Claims

1. A computer-implemented method of simulating the propagation of an audio signal between an audio source and receiver in a virtual environment, the virtual environment comprising one or more sound-reflective objects, the method comprising:
simulating a plurality of audio paths for propagating the audio signal between the audio source and receiver within the virtual environment, one or more of the simulated audio paths comprising a reflection from a sound reflective object; and
for one or more of the audio paths simulated, applying a deviation of the effective simulated position of one or more of the audio source, receiver and sound reflective object within the virtual environment, where the effective simulated position is used to determine a path delay associated with the simulated audio path..

2. The method of claim 1, wherein a differing deviation is applied to each of the audio paths simulated.

3. The method of claim 1 or claim 2, wherein the method comprises applying a time-varying deviation to the effective simulated position of one or more of the audio source, receiver and sound reflective object within the virtual environment.

4. The method of any preceding claim, wherein the sound reflective object comprises a reflective surface from which the audio signal is reflected between the source and receiver.

5. The method according to claim 4, wherein the method further comprises generating a mirror image audio source by reflecting the audio source in the reflective surface; and applying a deviation in the effective simulated position of the mirror image audio source.

6. The method according to claim 5, comprising generating a plurality of mirror image audio sources, by reflecting the audio source in each of a plurality of reflective surfaces of the virtual environment, wherein the method further comprises applying a different deviation to the effective simulated position of each mirror image audio source.

7. The method of any of claims 4-6, the method further comprising varying at least one of: an effective simulated position of the reflective surface between different simulated audio paths; and an orientation of the reflective surface between different simulated audio paths.

8. The method of any preceding claim wherein the method is performed at runtime of a videogame during simulation of the propagation of the audio signal during gameplay.

9. The method of any preceding claim, wherein applying the differing deviation of the effective simulated position comprises randomly adjusting the effective simulated position of one or more of the audio source, receiver and sound reflective object.

10. The method of claim 9, wherein the random adjusting of the effective simulated position is determined by a random walk.

11. The method of any preceding claim, further comprising determining at least one wavelength or at least one frequency of an audio signal to be propagated, and wherein the deviation of effective simulated position is determined based on the at least one wavelength or at least one frequency of the audio signal.

12. The method of claim 11, wherein determining at least one wavelength or at least one frequency of an audio signal to be propagated comprises determining a dominant frequency of the audio signal and determining the magnitude of the deviation based on the determined dominant frequency.

13. The method of claim 12, wherein the dominant frequency comprises the lowest dominant frequency of the audio signal.

14. The method of any of claims 11-13, wherein determining at least one wavelength or at least one frequency of an audio signal to be propagated comprises calculating the spectral centroid of the audio signal.

15. he method of any of claims 11 to 14, wherein the deviation of effective simulated position is greater for longer determined wavelengths of the audio signal and the deviation of effective simulated position is lesser for shorter determined wavelengths of the audio signal.

16. The method of any one of claims 12-15, further comprising determining a half wavelength value of a dominant frequency of the audio signal, and wherein the magnitude of the applied deviation is restricted to less than the half wavelength value.

17. The method of any preceding claim, further comprising:
performing audio content analysis on the audio signal to determine one or more dominant frequencies of the audio signal;
determining, based on the dominant frequencies, delay values likely to cause phase artefacts in the audio signal;
applying a random deviation to effective simulated position of one or more of the audio source, receiver and sound reflective object when simulating an audio path having a delay value within a predetermined threshold of a delay value likely to cause phase artefacts.

18. The method of any preceding claim comprising:
propagating an input audio signal over the audio paths following the adjustment to simulate an output audio signal comprising the perception of an audio signal at the receiver; and
outputting the output audio signal.

19. The method of any preceding claim comprising applying a plurality of deviations to the effective simulated position of one or more of the audio source, receiver and sound reflective object during propagation of an audio signal.

20. The method of any preceding claim wherein the magnitude of the deviation is enforced to be a prime number.

21. A computer program comprising instructions that, when executed by a computer, cause the computer to perform the method of any preceding claim.

22. A video gaming system comprise a processor configured to perform the method of any preceding claim.
